# EUROPÄISCHE PATENTSCHRIFT

(11) **EP 4 144 964 B1**
(45) Veröffentlichungstag und Bekanntmachung des Hinweises auf die Patenterteilung: **03.01.2024**
(21) Anmeldenummer: 22188204.6
(22) Anmeldetag: 02.08.2022
(51) Int. Cl.: F01N 3/20

(54) **ABGASANLAGE**
EXHAUST GAS SYSTEM
SYSTÈME D'ÉCHAPPEMENT

(30) Priorität: 01.09.2021 DE 102021122577
(43) Veröffentlichungstag der Anmeldung: 08.03.2023
(73) Patentinhaber: Purem GmbH, 66539 Neunkirchen (DE)
(72) Erfinder: Jambrosic, Kresimir, Reichenbach (DE); Guérin, Véronique, Stuttgart (DE); Popescu, Anton-Bogdan, Laichingen (DE)
(74) Vertreter: Ruttensperger Lachnit Trossin Gomoll

(56) Entgegenhaltungen:
- EP-A1- 3 825 528
- EP-A1- 3 964 696
- US-A- 4 723 973

## Beschreibung

Die vorliegende Erfindung betrifft eine Abgasanlage für eine Brennkraftmaschine. Um in Brennkraftmaschinen zugeordneten Abgasanlagen dafür zu sorgen, dass von Abgas durchströmte Systembereiche, insbesondere Abgasbehandlungseinheiten wie zum Beispiel Katalysatoren oder Partikelfilter, schnell auf Betriebstemperatur gebracht werden können, wenn eine Brennkraftmaschine gestartet wird, um dadurch die durch derartige Abgasbehandlungseinheiten im Allgemeinen bei vergleichsweise hohen Temperaturen durchzuführenden Reaktionen möglichst schnell nach dem Start der Brennkraftmaschine nutzen zu können, ist es bekannt, in derartigen Abgasanlagen stromaufwärts von Abgasbehandlungseinheiten Abgasheizer einzusetzen, welche Wärme auf den von einer Brennkraftmaschine ausgestoßenen Abgasstrom übertragen, um diese Wärme vermittels des Abgasstroms auf stromabwärts folgende Systembereiche zu übertragen und diese schneller auf Betriebstemperatur zu bringen. Eine gattungsgemäße Abgasanlage ist z.B. aus der EP 3825528 A1 bekannt.

Es ist die Aufgabe der vorliegenden Erfindung, eine kompakt gebaute und einen zur Verfügung stehenden Bauraum effizient nutzende Abgasanlage bereitzustellen. Erfindungsgemäß wird diese Aufgabe gelöst durch eine Abgasanlage für eine Brennkraftmaschine gemäß Anspruch 1. Diese Abgasanlage umfasst:
- ein Abgasheizergehäuse,
- wenigstens einen in dem Abgasheizergehäuse angeordneten Abgasheizer,
- ein mit einem stromaufwärtigen Endbereich an einen stromabwärtigen Endbereich des Abgasheizergehäuses anschließendes Abgasbehandlungseinheitgehäuse,
- wenigstens eine in dem Abgasbehandlungseinheitgehäuse angeordnete Abgasbehandlungseinheit,
wobei wenigstens ein Abgasheizer wenigstens ein in Richtung stromabwärts auf das Abgasbehandlungseinheitgehäuse zu sich erstreckendes und sich mit dem stromaufwärtigen Endbereich des Abgasbehandlungseinheitgehäuses oder/und einer in dem stromaufwärtigen Endbereich des Abgasbehandlungseinheitgehäuses angeordneten Abgasbehandlungseinheit in einer Abgas-Hauptströmungsrichtung überlappendes Anschlusselement umfasst.

Dadurch, dass ein derartiges Anschlusselement sich in einen stromabwärts bezüglich der Abgas-Hauptströmungsrichtung folgenden Systembereich bzw. sich mit diesem in der Abgas-Hauptströmungsrichtung in diesem Bereich überlappend erstreckt, können diese aneinander anschließenden Systembereiche, also das Abgasheizergehäuses mit den darin vorgesehenen Komponenten und das Abgasbehandlungseinheitgehäuse mit den darin vorgesehenen Komponenten, näher aneinander angeordnet werden. Dies führt zu einer kompakten Bauart bzw. einer effizienten Ausnutzung des für eine derartige Abgasanlage zur Verfügung stehenden Bauraums.

Um Raum für das wenigstens eine Anschlusselement bereitzustellen, wird vorgeschlagen, dass das wenigstens eine Anschlusselement einen mit der Abgasbehandlungseinheit oder/und dem Abgasbehandlungseinheitgehäuse in der Abgas-Hauptströmungsrichtung sich überlappenden Überlappungserstreckungsabschnitt aufweist, und dass das Abgasbehandlungseinheitgehäuse wenigstens in einem Erstreckungsbereich des Überlappungserstreckungsabschnitts des wenigstens einen Anschlusselements die in dem stromaufwärtigen Endbereich des Abgasbehandlungseinheitgehäuses angeordnete Abgasbehandlungseinheit an ihrer Außenumfangsseite nicht überdeckt.

Hierzu kann beispielsweise das Abgasbehandlungseinheitgehäuse im Erstreckungsbereich des Überlappungserstreckungsabschnitts des wenigstens einen Anschlusselements eine in Richtung stromaufwärts offene Überlappungserstreckungsabschnitt-Aufnahmeaussparung aufweisen.

Zum Verbinden eines Abgasheizers mit einer im Allgemeinen außerhalb der Abgasanlage angeordneten Spannungsquelle kann an dem Abgasheizergehäuse in Zuordnung zu jedem Anschlusselement eine dieses elektrisch kontaktierende Kontakteinheit vorgesehen sein.

Zur effizienten Ausnutzung des zur Verfügung stehenden Bauraums kann ferner wenigstens eine, vorzugsweise jede in Zuordnung zu einem Anschlusselement vorgesehene Kontakteinheit an einem mit dem Abgasbehandlungseinheitgehäuse oder/und der in dem stromaufwärtigen Endbereich des Abgasbehandlungseinheitgehäuses angeordneten Abgasbehandlungseinheit sich in der Abgas-Hauptströmungsrichtung überlappenden Abschnitt des Abgasheizergehäuses angeordnet sein.

Um dabei ein gegenseitiges Stören eines Anschlusselements mit einer Abgasbehandlungseinheit zu vermeiden, wird vorgeschlagen, dass das Abgasheizergehäuse in Zuordnung zu wenigstens einer, vorzugsweise jeder Kontakteinheit eine Kontakteinheit-Trageausbauchung aufweist, und dass wenigstens eine, vorzugsweise jede Kontakteinheit an dem Abgasheizergehäuses im Bereich der zugeordneten Kontakteinheit-Trageausbauchung getragen ist.

Dabei kann wenigstens eine, vorzugsweise jede Kontakteinheit-Trageausbauchung sich in der Abgas-Hauptströmungsrichtung wenigstens teilweise mit dem stromaufwärtigen Endbereich des Abgasbehandlungseinheitgehäuses oder/und der in dem stromaufwärtigen Endbereich des Abgasbehandlungseinheitgehäuses angeordneten Abgasbehandlungseinheit überlappen.

Um die beiden in der Abgas-Hauptströmungsrichtung aufeinander folgenden bzw. aneinander anschließenden Gehäuse, also das Abgasheizergehäuse und das Abgasbehandlungseinheitgehäuse, bei definierter Strömungsführung einfach aneinander anschließend positionieren zu können, wird vorgeschlagen, dass das Abgasheizergehäuse in seinem den wenigstens einen Abgasheizer aufnehmenden und den stromabwärtigen Endbereich bereitstellenden Gehäuseabschnitt in Richtung einer Abgasheizergehäuse-Längsachse langgestreckt ist, und dass das Abgasbehandlungseinheitgehäuse in seinem die wenigstens eine Abgasbehandlungseinheit aufnehmenden und den stromaufwärtigen Endbereich bereitstellenden Gehäuseabschnitt in Richtung einer Abgasbehandlungseinheitgehäuse-Längsachse langgestreckt ist.

Dabei kann eine kompakte Bauart dadurch unterstützt werden, dass das Abgasbehandlungseinheitgehäuse mit seinem stromaufwärtigen Endbereich in den stromabwärtigen Endbereich des Abgasheizergehäuses eingreifend positioniert ist.

Der wenigstens eine Abgasheizer kann wenigstens einen Heizleiter umfassen, wobei ein erstes der Anschlusselemente mit einem ersten Anschlussabschnitt des wenigstens einen Heizleiters elektrisch leitend verbunden ist oder diesen bereitstellt oder/und ein zweites der Anschlusselemente mit einem zweiten Anschlussabschnitt des wenigstens einen Heizleiters elektrisch leitend verbunden ist oder diesen bereitstellt.

Für eine sehr effiziente Erwärmung von in der Abgasanlage strömendem Abgas kann der wenigstens eine Abgasheizer zwei elektrisch zueinander seriell geschaltete, in der Abgas-Hauptströmungsrichtung aufeinander folgend angeordnete Heizleiter umfassen. Dabei kann bei einem der in der Abgas-Hauptströmungsrichtung aufeinander folgend angeordneten Heizleiter der ersten Anschlussabschnitt vorgesehen sein, und bei einem anderen der in der Abgas-Hauptströmungsrichtung aufeinander folgend angeordneten Heizleiter kann der zweite Anschlussabschnitt vorgesehen sein.

Zur Erwärmung von Abgas über den gesamten Strömungsquerschnitt hinweg kann wenigstens ein, vorzugsweise jeder Heizleiter zur Abgas-Hauptströmungsrichtung im Wesentlichen orthogonal sich erstreckend plattenartig ausgebildet sein.

Die vorliegende Erfindung wird nachfolgend mit Bezug auf die beiliegenden Figuren detailliert beschrieben. Es zeigt:
- Fig. 1: eine Längsschnittansicht eines Abgasheizergehäuses einer Abgasanlage mit einem in den stromabwärtigen Endbereich des Abgasheizergehäuses eingesetzten Abgasbehandlungseinheitgehäuse;
- Fig. 2: das Abgasheizergehäuse in perspektivischer Ansicht mit einem in einem stromabwärtigen Endbereich desselben angeordneten Abgasheizer.

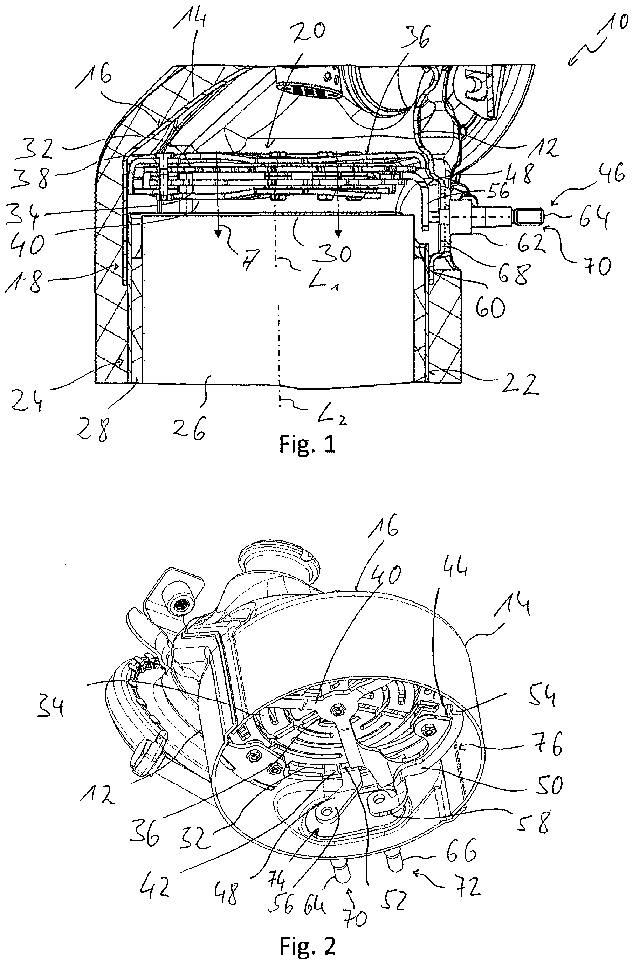

In Fig. 1 ist ein Abschnitt einer allgemein mit 10 bezeichneten Abgasanlage im Längsschnitt dargestellt. Der in Fig. 1 dargestellte Abschnitt der Abgasanlage 10 zeigt ein beispielsweise mit zwei Gehäuseschalen 12, 14 aufgebautes Abgasheizergehäuse 16, welches in einem stromabwärtigen, im Wesentlichen in Richtung einer Abgasheizergehäuse-Längsachse L₁ langgestreckten, näherungsweise zylindrischen stromabwärtigen Endbereich 18 einen allgemein mit 20 bezeichneten Abgasheizer trägt.

An das Abgasheizergehäuse 16 der Abgasanlage 10 schließt in dessen stromabwärtigem Endbereich 18 ein Abgasbehandlungseinheitgehäuse 22 mit seinem in Richtung einer Abgasbehandlungseinheitgehäuse-Längsachse L₂ langgestreckten, im Wesentlichen zylindrisch ausgebildeten stromaufwärtigen Endbereich 24 an. Die Abgasheizergehäuse-Längsachse L₁ und die Abgasbehandlungseinheitgehäuse-Längsachse L₂ können in den ineinander eingreifend positionierten Endbereichen 18, 20, in welchen das Abgasheizergehäuse 16 und das Abgasbehandlungseinheitgehäuse 22 beispielsweise mit kreisrundem Querschnitt ausgebildet sein können, zueinander parallel, insbesondere koaxial angeordnet sein, und das Abgasheizergehäuse 16 und das Abgasbehandlungseinheitgehäuse 22 können in ihren einander überlappend angeordneten Bereichen durch Verschweißung fest und gasdicht miteinander verbunden sein.

In dem Abgasbehandlungseinheitgehäuse 22 ist eine beispielsweise mit einem Monolith aufgebaute Abgasbehandlungseinheit 26 angeordnet und durch eine diese im Wesentlichen an deren gesamtem Außenumfang umgebende Trägeranordnung 28, beispielsweise eine oder mehrere Fasermatten oder dgl., im Abgasbehandlungseinheitgehäuse 22 fest gehalten, so dass vorzugsweise ein stromaufwärtiges Ende der Abgasbehandlungseinheit 26 im Wesentlichen bündig mit einem stromaufwärtigen Ende des Abgasbehandlungseinheitgehäuses 22 endet.

Die Abgasbehandlungseinheit 26 kann beispielsweise als Oxidationskatalysator oder als Partikelfilter aufgebaut sein, wobei der Monolith der Abgasbehandlungseinheit 26 mit katalytisch wirksamem Material beschichtet oder/und aufgebaut sein kann. Das in einer im Angrenzungsbereich des Abgasheizergehäuses 16 an das Abgasbehandlungseinheitgehäuse 22 im Wesentlichen der Orientierung der beiden beispielsweise koaxial zueinander stehenden Längsachsen L₁, L₂ entsprechenden Abgas-Hauptströmungsrichtung A aus dem Abgasheizergehäuse 16 durch den Abgasheizer 20 hindurch auf die Abgasbehandlungseinheit 26 zu strömende Abgas kann im Bereich einer dem Abgasheizer 20 zugewandten Stirnfläche 30 der Abgasbehandlungseinheit 26 in die Porenstruktur derselben eintreten und dabei an der in der Abgasbehandlungseinheit 26 gebildeten Oberfläche der durch die Abgasbehandlungseinheit 26 bereitzustellenden katalytischen Reaktion unterzogen werden.

Der Abgasheizer 20 umfasst im dargestellten Ausgestaltungsbeispiel zwei in der Abgas-Hauptströmungsrichtung A bzw. in Richtung der Abgasheizergehäuse-Längsachse L₁ aufeinander folgend angeordnete Heizleiter 32, 34. Jeder dieser Heizleiter 32, 34 ist plattenartig ausgebildet und erstreckt sich somit im Wesentlichen in einer zur Abgasheizergehäuse-Längsachse L₁ bzw. zur Abgas-Hauptströmungsrichtung A orthogonalen Richtung bzw. Ebene. Beispielsweise können die beiden Heizleiter 32, 34 durch Heraustrennen aus einem Flachmaterialrohling aus Metallmaterial erzeugt werden, welches bei Anliegen einer elektrischen Spannung und somit dieses durchfließendem elektrischen Strom erwärmt wird. Alternativ könnten die Heizleiter 32, 34 auch durch spiralartiges oder mäanderartiges Wickeln eines drahtartigen Heizleiters bereitgestellt sein, wobei eine derartige Wicklung bzw. allgemein die Struktur der Heizleiter 32, 34 derart sein kann, dass diese beispielsweise in kegelartiger bzw. kegelstumpfartiger Struktur in Richtung der Abgasheizergehäuse-Längsachse L₁ ausgedehnt ist.

Der Abgasheizer 20 umfasst ferner eine Trägeranordnung 36, über welche dieser an der Innenseite des Abgasheizergehäuses 16 festgelegt ist. Die Trägeranordnung 36 umfasst an den beiden axialen Seiten der beiden Heizleiter 32, 34 im Wesentlichen plattenartige, d. h. im Wesentlichen in einer Ebene orthogonal zur Abgasheizergehäuse-Längsachse L₁ liegende Trägerelemente 38, 40, beispielsweise aus umgeformtem bzw. durch Heraustrennen aus einem Flachmaterialrohling gebildete Blechelemente. Eines der beiden Trägerelemente 38, 40 ist in seinem Außenumfangsbereich axial abgebogen und mit diesem Abbiegungsbereich an der Innenoberfläche des Abgasheizergehäuses 16 beispielsweise durch Materialschluss, wie z. B. Verschweißen, festgelegt.

Zur elektrischen Isolierung sind zwischen den beiden Heizleitern 32, 34 sowie zwischen diesen und den Trägerelementen 38, 40 beispielsweise mit Keramikmaterial aufgebaute Isolierelemente angeordnet. Der feste Zusammenhalt des Abgasheizers 20 kann durch mehrere die Trägerelemente 38, 40, die Heizleiter 32, 34 und auch die diese bezüglich einander elektrisch isoliert tragenden Isolierelemente durchsetzende Schraubbolzen oder dgl. erreicht werden.

Im dargestellten Ausgestaltungsbeispiel sind die beiden Heizleiter 32, 34 zueinander seriell geschaltet. Dies bedeutet, dass jeder der beiden Heizleiter 32, 34, die beispielsweise mit mit mäanderartiger Struktur verlaufenden Heizleiterabschnitten aufgebaut sein können, ein Anschlussende aufweist, welches mit einem Anschlussende des jeweils anderen Heizleiters elektrisch leitend verbunden ist. Jeder Heizleiter 32, 34 weist dann ein weiteres Anschlussende 42, 44 auf, wobei über diese Anschlussenden 42, 44 die beiden zueinander seriell geschalteten Heizleiter 32, 34 über eine in Fig. 1 erkennbare Kontaktanordnung 46 mit einer Spannungsquelle, beispielsweise der in einem Fahrzeug vorgesehenen Batterie, elektrisch leitend verbunden sind.

Zur Erzeugung dieser elektrisch leitenden Verbindung ist in Zuordnung zu jedem Anschlussende 42, 44 ein beispielsweise aus Blechmaterial aufgebautes Anschlusselement 48, 50 vorgesehen. Jedes Anschlusselement 48, 50 weist einen an ein zugeordnetes Anschlussende 42, 44 der Heizleiter 32, 34 beispielsweise durch Materialschluss, also beispielsweise Verschweißen oder Verlöten, angebundenen Verbindungsabschnitt 52, 54 sowie einen vom Verbindungsabschnitt in Richtung der Abgas-Hauptströmungsrichtung A bzw. der Längsachsen L₁, L₂ abgebogenen und sich somit auf das Abgasbehandlungseinheitgehäuse 22 zu erstreckenden Überlappungserstreckungsabschnitt 56, 58 auf. Die beiden Überlappungserstreckungsabschnitte 56, 58 erstrecken sich axial über die Trägeranordnung 36 hinaus in der Abgas-Hauptströmungsrichtung A bzw. in Richtung der beiden Längsachsen L₁, L₂ einander in Umfangsrichtung benachbart bis in den Erstreckungsbereich der Kontaktanordnung 46 bzw. auch des Abgasbehandlungseinheitgehäuses 22. Um dies zu ermöglichen, weist das Abgasbehandlungseinheitgehäuse 22 in Zuordnung zu den beiden Überlappungserstreckungsabschnitten 56, 58 eine in Richtung der Abgasbehandlungseinheitgehäuse-Längsachse L₂ und in Richtung stromaufwärts offene Überlappungserstreckungsabschnitt-Aufnahmeaussparung 60 auf. Im Bereich der Überlappungserstreckungsabschnitt-Aufnahmeaussparung 60 ist die Abgasbehandlungseinheit 26 an ihrem Außenumfang nicht vom Abgasbehandlungseinheitgehäuse 22 überdeckt. Auch die Trägeranordnung 28 weist in diesem Bereich eine Aussparung auf, um Raum für die Aufnahme der Überlappungserstreckungsabschnitte 56, 58 zu schaffen. Diese überlappen sich somit in axialer Richtung mit der im stromaufwärtigen Endbereich 24 des Abgasbehandlungseinheitgehäuses 22 angeordneten Abgasbehandlungseinheit 26 und überlappen sich in axialer Richtung bzw. in Umfangsrichtung mit dem Abgasbehandlungseinheitgehäuse 22.

In Zuordnung zu jedem Überlappungserstreckungsabschnitt 56, 58 umfasst die Kontaktanordnung 46 ein durch eine Kontaktträgeranordnung 62 am Abgasheizergehäuse 16 getragenes, elektrisch leitendes Kontaktelement 64, 66. Die innerhalb des Abgasheizergehäuses 16 freiliegenden Endabschnitte der Kontaktelemente 64, 66 sind beispielsweise in eine jeweils zugeordnete Öffnung im jeweiligen Überlappungserstreckungsabschnitt 56, 58 eingesetzt und in diesem Bereich mit dem zugeordneten Überlappungserstreckungsabschnitt 56, 58 durch Materialschluss, beispielsweise Verschweißen oder Verlöten, fest verbunden.

Um die Überlappungserstreckungsabschnitte 56, 58 in ausreichendem axialem Abstand zur Außenseite der Abgasbehandlungseinheit 26 anordnen zu können, ist am Abgasheizergehäuse 16 in demjenigen Bereich, in welchem die Kontaktträgeranordnung 62 an diesem getragen ist, eine eine Kontakteinheit-Trageausbauchung 68 bereitstellende radiale Ausformung vorgesehen, welche sich mit dem stromaufwärtigen Endbereich 24 des Abgasbehandlungseinheitgehäuses 22 wenigstens teilweise überlappt. Somit ist im Bereich der Kontakteinheit-Trageausbauchung 68 die Kontaktanordnung 46 radial weiter nach außen verlagert positioniert. Es ist somit ausreichend Bauraum für die elektrische Kontaktierung von jedem der Überlappungserstreckungsabschnitte 56, 58 mit jedem der in Verbindung mit der Kontaktträgeranordnung 62 eine jeweilige Kontakteinheit 70 bzw. 72 bereitstellenden Kontaktelemente 64, 66 vorgesehen.

Durch das Bereitstellen der Anschlusselemente 48, 50 wird die Möglichkeit geschaffen, die Positionierung der Kontaktanordnung 46 im Wesentlichen unabhängig von der Positionierung des Abgasheizers 20 in Richtung der Abgasheizergehäuse-Längsachse L₁ zu wählen. Gleichzeitig besteht die Möglichkeit, die Abgasbehandlungseinheit 26 weiter in Richtung stromaufwärts auf den Abgasheizer 20 zu verlagert zu positionieren, so dass der zur Verfügung stehende Bauraum effizient genutzt werden kann. Aufgrund der Verlagerung der Kontaktanordnung 46 weiter nach radial außen wird dabei ein gegenseitiges Stören der Anschlusselemente 48, 50 mit der Abgasbehandlungseinheit 26 auch unter Berücksichtigung der beim Aufbau derartiger Abgasanlagen 10 unvermeidbar auftretenden Fertigungstoleranzen vermieden.

Es wird abschließend darauf hingewiesen, dass an dem vorangehend beschriebenen Aufbau verschiedenste Änderungen vorgenommen werden können, ohne vom Wesen der vorliegenden Erfindung abzuweichen. So könnte beispielsweise das Abgasbehandlungseinheitgehäuse 22 grundsätzlich derart kürzer ausgebildet sein, dass die Abgasbehandlungseinheit 26 im gesamten stromaufwärtigen Endbereich 24 über das Abgasbehandlungseinheitgehäuse 22 hervorsteht und somit nicht nur im Bereich einer Aussparung, sondern im gesamten Umfangsbereich nicht von dem Abgasbehandlungseinheitgehäuse 22 überdeckt ist. Die beiden Anschlusselemente 48, 50 bzw. deren Überlappungserstreckungsabschnitte 56, 58 könnten in größerem Umfangsabstand zueinander positioniert sein, so dass beispielsweise in Zuordnung zu jedem der Überlappungserstreckungsabschnitte 56, 58 das Abgasbehandlungseinheitgehäuse 22 eine separate Überlappungserstreckungsabschnitt-Aufnahmeaussparung 60 aufweist. Auch könnten die Kontakteinheiten 70, 72 bzw. deren Kontaktelemente 64, 66 in größerem Umfangsabstand und beispielsweise auch in verschiedenen axialen Bereichen des Abgasheizergehäuses 16 angeordnet und beispielsweise über separate Kontaktträgeranordnungen 62 an diesen zugeordneten separaten Kontakteinheit-Trageausbauchungen 68 vorgesehen sein.

Weiter ist darauf hinzuweisen, dass beispielsweise der Abgasheizer 20 auch mit nur einem einzigen, beispielsweise im Wesentlichen plattenartigen Heizleiter aufgebaut sein könnte oder mehr als zwei in der Abgas-Hauptströmungsrichtung A aufeinander folgende Heizleiter aufweisen könnte. Bei Ausgestaltung mit mehreren Heizleitern könnten diese auch zueinander parallel geschaltet sein, so dass jedes einen Anschlussabschnitt 74, 76 bereitstellendes Anschlusselement 48, 50 dann mit mehreren Anschlussenden dieser Heizleiter elektrisch leitend verbunden ist. Alternativ könnten die Anschlusselemente 48, 50 oder zumindest eines der Anschlusselement 48, 50 als integraler Bestandteil eines oder ggf. verschiedener Heizleiter ausgebildet sein, so dass ein jeweiliger zum Anschluss an eine der Kontakteinheiten 70, 72 genutzter Anschlussabschnitt 74, 76 nicht durch ein separates Bauteil bereitgestellt ist, sondern durch einen auch ein jeweiliges Anschlussende 42, 44 bereitstellenden Abschnitt eines Heizleiters bereitgestellt ist.

## Patentansprüche

1. Abgasanlage für eine Brennkraftmaschine, umfassend:
- ein Abgasheizergehäuse (16),
- wenigstens einen in dem Abgasheizergehäuse (16) angeordneten Abgasheizer (20),
- ein mit einem stromaufwärtigen Endbereich (24) an einen stromabwärtigen Endbereich (18) des Abgasheizergehäuses (16) anschließendes Abgasbehandlungseinheitgehäuse (22),
- wenigstens eine in dem Abgasbehandlungseinheitgehäuse (22) angeordnete Abgasbehandlungseinheit (26),
wobei wenigstens ein Abgasheizer (20) wenigstens ein in Richtung stromabwärts auf das Abgasbehandlungseinheitgehäuse (22) zu sich erstreckendes und sich mit dem stromaufwärtigen Endbereich (24) des Abgasbehandlungseinheitgehäuses (22) oder/und einer in dem stromaufwärtigen Endbereich (24) des Abgasbehandlungseinheitgehäuses (22) angeordneten Abgasbehandlungseinheit (26) in einer Abgas-Hauptströmungsrichtung (A) überlappendes Anschlusselement (48, 50) umfasst.

2. Abgasanlage nach Anspruch 1, **dadurch gekennzeichnet, dass** das wenigstens eine Anschlusselement (48, 50) einen mit der Abgasbehandlungseinheit (26) oder/und dem Abgasbehandlungseinheitgehäuse (22) in der Abgas-Hauptströmungsrichtung (A) sich überlappenden Überlappungserstreckungsabschnitt (56, 58) aufweist, und dass das Abgasbehandlungseinheitgehäuse (22) wenigstens in einem Erstreckungsbereich des Überlappungserstreckungsabschnitts (56, 58) des wenigstens einen Anschlusselements (48, 50) die in dem stromaufwärtigen Endbereich (24) des Abgasbehandlungseinheitgehäuses (22) angeordnete Abgasbehandlungseinheit (26) an ihrer Außenumfangsseite nicht überdeckt.

3. Abgasanlage nach Anspruch 2, **dadurch gekennzeichnet, dass** das Abgasbehandlungseinheitgehäuse (22) im Erstreckungsbereich des Überlappungserstreckungsabschnitts (56, 58) des wenigstens einen Anschlusselements (48, 50) eine in Richtung stromaufwärts offene Überlappungserstreckungsabschnitt-Aufnahmeaussparung (60) aufweist.

4. Abgasanlage nach einem der Ansprüche 1-3, **dadurch gekennzeichnet, dass** an dem Abgasheizergehäuse (16) in Zuordnung zu jedem Anschlusselement (48, 50) eine dieses elektrisch kontaktierende Kontakteinheit (70, 72) vorgesehen ist.

5. Abgasanlage nach Anspruch 4, **dadurch gekennzeichnet, dass** wenigstens eine, vorzugsweise jede in Zuordnung zu einem Anschlusselement (48, 50) vorgesehene Kontakteinheit (70, 72) an einem mit dem Abgasbehandlungseinheitgehäuse (22) oder/und der in dem stromaufwärtigen Endbereich (24) des Abgasbehandlungseinheitgehäuses (22) angeordneten Abgasbehandlungseinheit (26) sich in der Abgas-Hauptströmungsrichtung (A) überlappenden Abschnitt des Abgasheizergehäuses (16) angeordnet ist.

6. Abgasanlage nach Anspruch 4 oder 5, **dadurch gekennzeichnet, dass** das Abgasheizergehäuse (16) in Zuordnung zu wenigstens einer, vorzugsweise jeder Kontakteinheit (72, 74) eine Kontakteinheit-Trageausbauchung (68) aufweist, und dass wenigstens eine, vorzugsweise jede Kontakteinheit (70, 72) an dem Abgasheizergehäuse (16) im Bereich der zugeordneten Kontakteinheit-Trageausbauchung (68) getragen ist.

7. Abgasanlage nach Anspruch 6, **dadurch gekennzeichnet, dass** wenigstens eine, vorzugsweise jede Kontakteinheit-Trageausbauchung (68) sich in der Abgas-Hauptströmungsrichtung (A) wenigstens teilweise mit dem stromaufwärtigen Endbereich (24) des Abgasbehandlungseinheitgehäuses (22) oder/und der in dem stromaufwärtigen Endbereich (24) des Abgasbehandlungseinheitgehäuses (22) angeordneten Abgasbehandlungseinheit (26) überlappt.

8. Abgasanlage nach einem der Ansprüche 1-7, **dadurch gekennzeichnet, dass** das Abgasheizergehäuse (16) in seinem den wenigstens einen Abgasheizer (20) aufnehmenden und den stromabwärtigen Endbereich (18) bereitstellenden Gehäuseabschnitt in Richtung einer Abgasheizergehäuse-Längsachse (L₁) langgestreckt ist, und dass das Abgasbehandlungseinheitgehäuse (22) in seinem die wenigstens eine Abgasbehandlungseinheit (26) aufnehmenden und den stromaufwärtigen Endbereich (24) bereitstellenden Gehäuseabschnitt in Richtung einer Abgasbehandlungseinheitgehäuse-Längsachse (L₂) langgestreckt ist.

9. Abgasanlage nach einem der Ansprüche 1-8, **dadurch gekennzeichnet, dass** das Abgasbehandlungseinheitgehäuse (22) mit seinem stromaufwärtigen Endbereich (24) in den stromabwärtigen Endbereich (18) des Abgasheizergehäuses (16) eingreifend positioniert ist.

10. Abgasanlage nach einem der Ansprüche 1-9, **dadurch gekennzeichnet, dass** der wenigstens eine Abgasheizer (20) wenigstens einen Heizleiter (32, 34) umfasst, und dass ein erstes der Anschlusselemente (48) mit einem ersten Anschlussabschnitt (74) des wenigstens einen Heizleiters (32, 34) elektrisch leitend verbunden ist oder diesen bereitstellt oder/und ein zweites der Anschlusselemente (50) mit einem zweiten Anschlussabschnitt (76) wenigstens einen Heizleiters (32, 34) elektrisch leitend verbunden ist oder diesen bereitstellt.

11. Abgasanlage nach Anspruch 10, **dadurch gekennzeichnet, dass** der wenigstens eine Abgasheizer (20) zwei elektrisch zueinander seriell geschaltete, in der Abgas-Hauptströmungsrichtung (A) aufeinander folgend angeordnete Heizleiter (32, 34) umfasst, und dass bei einem der in der Abgas-Hauptströmungsrichtung (A) aufeinanderfolgend angeordneten Heizleiter (32, 34) der erste Anschlussabschnitt (74) vorgesehen ist und bei einem anderen der in der Abgas-Hauptströmungsrichtung (A) aufeinander folgend angeordneten Heizleiter (32, 34) der zweite Anschlussabschnitt (76) vorgesehen ist.

12. Abgasanlage nach Anspruch 10 oder 11, **dadurch gekennzeichnet, dass** wenigstens ein, vorzugsweise jeder Heizleiter (32) zur Abgas-Hauptströmungsrichtung (A) im Wesentlichen orthogonal sich erstreckend plattenartig ausgebildet ist.

## Claims

1. An exhaust system for an internal combustion engine, comprising:
- an exhaust gas heater housing (16),
- at least one exhaust gas heater (20) disposed in the exhaust gas heater housing (16),
- an exhaust gas treatment unit housing (22) which by way of an upstream end region (24) adjoins a downstream end region (18) of the exhaust gas heater housing (16),
- at least one exhaust gas treatment unit (26) disposed in the exhaust gas treatment unit housing (22),
wherein at least one exhaust gas heater (20) comprises at least one connector element (48, 50) extending in a downstream direction towards the exhaust gas treatment unit housing (22) and overlapping in an exhaust gas primary flow direction (A) with the upstream end region (24) of the exhaust gas treatment unit housing (22) and/or with an exhaust gas treatment unit (26) disposed in the upstream end region (24) of the exhaust gas treatment unit housing (22).

2. The exhaust gas system as claimed in claim 1, **characterized in that** the at least one connector element (48, 50) has an overlap extent portion (56, 58) that in the exhaust gas primary flow direction (A) overlaps with the exhaust gas treatment unit (26) and/or the exhaust gas treatment unit housing (22), and that the exhaust gas treatment unit housing (22), at least in one extent region of the overlap extent portion (56, 58) of the at least one connector element (48, 50), does not cover the exhaust gas treatment unit (26) on the external circumferential side thereof, said exhaust gas treatment unit (26) being disposed in the upstream end region (24) of the exhaust gas treatment unit housing (22).

3. The exhaust system as claimed in claim 2, **characterized in that** the exhaust gas treatment unit housing (22) in the extent region of the overlap extent portion (56, 58) of the at least one connector element (48, 50) has an overlap extent portion reception clearance (60) that is open in the upstream direction.

4. The exhaust system as claimed in one of claims 1 to 3, **characterized in that** one contact unit (70, 72) assigned to each connector element (48, 50) for electrically contacting the latter is provided on the exhaust gas heater housing (16).

5. The exhaust system as claimed in claim 4, **characterized in that** at least one, preferably each, contact unit (70, 72) assigned to a connector element (48, 50) is disposed on a portion of the exhaust gas heater housing (16) that in the exhaust gas primary flow direction (A) overlaps with the exhaust gas treatment unit housing (22) and/or with the exhaust gas treatment unit (26) disposed in the upstream end region (24) of the exhaust gas treatment unit housing (22).

6. The exhaust system as claimed in claim 4 or 5, **characterized in that** the exhaust gas heater housing (16) has a contact unit support convexity (68) assigned to at least one, preferably each, contact unit (72, 74), and that at least one, preferably each, contact unit (70, 72) on the exhaust gas heater housing (16) is supported in the region of the assigned contact unit support convexity (68).

7. The exhaust system as claimed in claim 6, **characterized in that** at least one, preferably each, contact unit support convexity (68) in the exhaust gas primary flow direction (A) at least partially overlaps with the upstream end region (24) of the exhaust gas treatment unit housing (22) and/or with the exhaust gas treatment unit (26) disposed in the upstream end region (24) of the exhaust gas treatment unit housing (22).

8. The exhaust system as claimed in one of claims 1 to 7, **characterized in that** the exhaust gas heater housing (16) in the housing portion thereof that receives the at least one exhaust gas heater (20) and provides the downstream end region (18) is elongate in the direction of an exhaust gas heater housing longitudinal axis (L₁), and that the exhaust gas treatment unit housing (22) in the housing portion thereof that receives the at least one exhaust gas treatment unit (26) and provides the upstream end region (24) is elongate in the direction of an exhaust gas treatment unit housing longitudinal axis (L₂).

9. The exhaust system as claimed in one of claims 1 to 8, **characterized in that** the exhaust gas treatment unit housing (22) by way of the upstream end region (24) thereof is positioned so as to engage in the downstream end region (18) of the exhaust gas heater housing (16).

10. The exhaust system as claimed in one of claims 1 to 9, **characterized in that** the at least one exhaust gas heater (20) comprises at least one heating conductor (32, 34), and wherein a first one of the connector elements (48) is connected in an electrically conducting manner to a first connector portion (74) of the at least one heating conductor (32, 34) or provides the latter, and/or a second one of the connector elements (50) is connected in an electrically conducting manner to a second connector portion (76) of at least one heating conductor (32, 34) or provides the latter.

11. The exhaust system as claimed in claim 10, **characterized in that** the at least one exhaust gas heater (20) comprises two heating conductors (32, 34) that are electrically connected in series and successively disposed in the exhaust gas primary flow direction (A), and that the first connector portion (74) is provided in one of the heating conductors (32, 34) successively disposed in the exhaust gas primary flow direction (A), and the second connector portion (76) is provided in another one of the heating conductors (32, 34) successively disposed in the exhaust gas primary flow direction (A).

12. The exhaust system as claimed in claim 10 or 11, **characterized in that** at least one, preferably each, heating conductor (32) is configured so as to, in the manner of a plate, extend substantially orthogonally to the exhaust gas primary flow direction (A).

## Revendications

1. Un système d'échappement pour un moteur à combustion interne, comprenant :
- un boîtier de chauffage des gaz d'échappement (16),
- au moins un chauffage de gaz d'échappement (20) disposé dans le boîtier de chauffage de gaz d'échappement (16),
- un boîtier d'unité de traitement des gaz d'échappement (22) qui, par l'intermédiaire d'une zone d'extrémité amont (24), est adjacent à une zone d'extrémité aval (18) du boîtier de chauffage des gaz d'échappement (16),
- au moins une unité de traitement des gaz d'échappement (26) disposée dans le boîtier d'unité de traitement des gaz d'échappement (22),
dans lequel au moins un dispositif de chauffage des gaz d'échappement (20) comprend au moins un élément de raccordement (48, 50) qui, dans une direction aval, s'étend vers ledit dispositif de chauffage des gaz d'échappement (20) et, dans une direction d'écoulement primaire des gaz d'échappement (A), chevauche la région d'extrémité amont (24) du boîtier d'unité de traitement des gaz d'échappement (22) et/ou une unité de traitement des gaz d'échappement (26) disposée dans la région d'extrémité amont (24) du boîtier d'unité de traitement des gaz d'échappement (22).

2. Système de gaz d'échappement selon la revendication 1, **caractérisé en ce qu'**au moins un élément de raccordement (48, 50) a une partie d'extension de chevauchement (56, 58) qui, dans la direction d'écoulement primaire des gaz d'échappement (A), chevauche l'unité de traitement des gaz d'échappement (26) et/ou le boîtier d'unité de traitement des gaz d'échappement (22), et que le boîtier d'unité de traitement des gaz d'échappement (22), au moins dans une zone d'extension du boîtier d'unité de traitement des gaz d'échappement (22), au moins dans une zone d'extension de la partie d'extension de chevauchement (56, 58) dudit au moins un élément de raccordement (48, 50), ne recouvre pas l'unité de traitement des gaz d'échappement (26) sur son côté circonférentiel externe, ladite unité de traitement des gaz d'échappement (26) étant disposée dans la zone d'extrémité amont (24) du boîtier d'unité de traitement des gaz d'échappement (22).

3. Système d'échappement selon la revendication 2, **caractérisé en ce que** le boîtier d'unité de traitement des gaz d'échappement (22) dans la zone d'extension de la partie d'extension de chevauchement (56, 58) dudit au moins un élément de raccordement (48, 50) a un dégagement de réception de partie d'extension de chevauchement (60) qui est ouvert dans la direction amont.

4. Système d'échappement selon l'une des revendications 1 à 3, **caractérisé en ce qu'**une unité de contact (70, 72) prévue en association à chaque élément de raccordement (48, 50) pour le mettre en contact électrique avec ce dernier est prévue sur le boîtier de chauffage de gaz d'échappement (16).

5. Système d'échappement selon la revendication 4, **caractérisé en ce qu'**au moins une, de préférence chaque, unité de contact (70, 72) prévue en association à un élément de raccordement (48, 50) est disposée sur une partie du boîtier de chauffage des gaz d'échappement (16) qui, dans la direction d'écoulement primaire des gaz d'échappement (A), chevauche le boîtier d'unité de traitement des gaz d'échappement (22) et/ou l'unité de traitement des gaz d'échappement (26) disposée dans la région d'extrémité amont (24) du boîtier d'unité de traitement des gaz d'échappement (22).

6. Système d'échappement selon la revendication 4 ou 5, **caractérisé en ce que** le boîtier de dispositif de chauffage des gaz d'échappement (16) a une convexité de support d'unité de contact (68) prévue en association à au moins une, de préférence chaque, unité de contact (72, 74), et **en ce qu'**au moins une, de préférence chaque, unité de contact (70, 72) sur le boîtier de dispositif de chauffage des gaz d'échappement (16) est supportée dans la région de la convexité de support d'unité de contact associée (68).

7. Système d'échappement selon la revendication 6, **caractérisé en ce qu'**au moins une, de préférence chaque convexité de support d'unité de contact (68), dans la direction d'écoulement primaire des gaz d'échappement (A) chevauche au moins partiellement la région d'extrémité amont (24) du boîtier d'unité de traitement des gaz d'échappement (22) et/ou l'unité de traitement des gaz d'échappement (26) disposée dans la région d'extrémité amont (24) du boîtier d'unité de traitement des gaz d'échappement (22).

8. Système d'échappement selon l'une des revendications 1 à 7, **caractérisé en ce que** le boîtier de dispositif de chauffage des gaz d'échappement (16), dans la partie du boîtier qui reçoit au moins un dispositif de chauffage des gaz d'échappement (20) et fournit la région d'extrémité en aval (18) est allongé dans la direction d'un axe longitudinal de boîtier de dispositif de chauffage des gaz d'échappement (L₁), et dans lequel le boîtier d'unité de traitement des gaz d'échappement (22) dans la partie du boîtier qui reçoit au moins une unité de traitement des gaz d'échappement (26) et fournit la région d'extrémité en amont (24) est allongé dans la direction d'un axe longitudinal de boîtier d'unité de traitement des gaz d'échappement (L₂).

9. Système d'échappement selon l'une des revendications 1 à 8, **caractérisé en ce que** le boîtier d'unité de traitement des gaz d'échappement (22), par l'intermédiaire de sa zone d'extrémité amont (24), est positionné de manière à s'engager dans la zone d'extrémité aval (18) du boîtier de chauffage de gaz d'échappement (16).

10. Système d'échappement selon l'une des revendications 1 à 9, **caractérisé en ce que** ledit au moins un dispositif de chauffage des gaz d'échappement (20) comprend au moins un conducteur de chauffage (32, 34), et dans lequel un premier des éléments de raccordement (48) est connecté de manière électriquement conductrice à une première partie de raccordement (74) dudit au moins un conducteur de chauffage (32, 34) ou fournit cette dernière, et/ou un second des éléments de raccordement (50) est connecté de manière électriquement conductrice à une seconde partie de raccordement (76) dudit au moins un conducteur de chauffage (32, 34) ou fournit cette dernière.

11. Système d'échappement selon la revendication 10, **caractérisé en ce que** ledit au moins un dispositif de chauffage des gaz d'échappement (20) comprend deux conducteurs de chauffage (32, 34) qui sont connectés électriquement en série et disposés successivement dans la direction d'écoulement primaire des gaz d'échappement (A), et **en ce que** la première partie de connecteur (74) est prévue dans l'un des conducteurs de chauffage (32, 34) disposés successivement dans la direction d'écoulement primaire des gaz d'échappement (A), et la deuxième partie de connecteur (76) est prévue dans un autre des conducteurs de chauffage (32, 34) disposés successivement dans la direction d'écoulement primaire des gaz d'échappement (A).

12. Système d'échappement selon la revendication 10 ou 11, **caractérisé en ce qu'**au moins un, de préférence chaque, conducteur de chauffage (32) est configuré de manière à s'étendre, à la manière d'une plaque, sensiblement orthogonalement à la direction d'écoulement primaire des gaz d'échappement (A).
